Europäisches Patentamt

European Patent Office

Office européen des brevets

(11) Veröffentlichungsnummer: **0 412 173 A1**

(12) **EUROPÄISCHE PATENTANMELDUNG**

(21) Anmeldenummer: 89114347.1

(22) Anmeldetag: 03.08.89

(51) Int. Cl.5: **C02F 1/52**, B01D 21/08, B01D 21/24

(43) Veröffentlichungstag der Anmeldung:
**13.02.91 Patentblatt 91/07**

(84) Benannte Vertragsstaaten:
**AT BE DE GR LU NL**

(71) Anmelder: **SIGMA koncern**
**Trida Kosmonautu 6**
**Olomouc(CS)**

(72) Erfinder: **Rezkydálek, Jiri, Doz.Ing. CSc**

Ulrychova 30
Brno(CS)
Erfinder: **Kalous, Jaroslav, Dipl.Ing.**
Ostrovaciská 13
Brno(CS)

(74) Vertreter: **Patentanwälte Beetz sen. - Beetz**
**jun. Timpe - Siegfried - Schmitt-Fumian**
**Steinsdorfstrasse 10**
**D-8000 München 22(DE)**

(54) **Verfahren und Anlage zur Aufbereitung und Reinigung von Abwasser.**

(57) Die Anlage zur kontinuierlichen physikalisch-chemischen Aufbereitung und Reinigung von Abwasser, Flüssigkeitssuspensionen und/oder von Lösungen vereinigt in einem gemeinsamen, hydraulisch durchgeschalteten Raum die Funktionsräume für die Fällungs-, Reduktionsoxydations-, Neutralisations-, Koagulations- und Flockungsprozesse, sowie die Räume für die Fluidseparation, die Absetzung, die Tieffiltration und gegebenenfalls auch für die Sorptionsfiltration einschließlich der Eindickung der abgetrennten Schlämme sowie einen Waschwasserspeicher für verunreinigtes Filtermaterial. Ein Flockungsraum (3) mit dem Rohwasserzulauf (36) ist seitlich von einer Trennwand (11) begrenzt, welcher eine kontinuerliche Veränderung des Geschwindigkeitsgradienten ermöglicht. Die zumindest teilweise in der absteigenden Strömung ausgeflockte Suspension fließt im Diffusor eines Fluidreaktors (4) nach aufwärts, welcher gegebenenfalls mit Einbauten (59) zur Konzentrationserhöhung und zur gleichmäßigen Zerlegung der Flockenwolke versehen sein kann. Der überschüssige Schlamm fließt in einen Eindicker (6). Ein Filter (7) aus schwimmendem Filtrationsmaterial, ein Waschwasserspeicher (8) und gegebenenfalls auch das Sorptionsfilter (9) sind in einem Filtrationsbecken (2) vorgesehen, das über oder neben dem Reaktionsbecken (1) angeordnet werden kann.

FIG. 1

## VERFAHREN UND ANLAGE ZUR AUFBEREITUNG UND REINIGUNG VON ABWASSER

Die Erfindung betrifft ein Verfahren und eine Anlage zur kontinuierlichen mehrstufigen chemisch-physikalischen Aufbereitung von Flüssigkeitssuspensionen oder von Lösungen, bei der in einem hydraulisch durchgeschalteten Raum die Funktionsräume für die Fällungs-, Reduktionsoxydations-, Neutralisations- und Koagulationsprozesse, sowie die Räume für die Operationen der mechanischen Separation der suspendierten Stoffe vorgesehen sind.

Bei der Aufbereitung und chemischen Reinigung von Flüssigkeitssuspensionen und Lösungen werden in der Regel Chemikalien eingesetzt, die mit den Verunreinigungen zu Fällprodukten und Flocken reagieren, welche anschließend durch ein- und mehrstufige Separation von der Flüssigkeit getrennt werden. Die dabei eingesetzten Einrichtungen enthalten mehrere, durch Rohrleitungen miteinander verbundene Becken, in welchen die einzelnen Operationen ablaufen.

Es sind auch komplexe Aufbereitungsanlagen bekannt (z. B. nach CS 189 242), in denen die angeführten Operationen in einem gemeinsamen Becken stattfinden. Die Steuerung und der Ablauf der einzelnen Operationen ist in dieser Kompaktanlage jedoch nicht optimal. Die Übergänge der einzelnen Operationen werden durch die verschiedenen Oberflächenbelastungen der zugehörigen Funktionsstufe beeinträchtigt, was einerseits Schwankungen im Betriebsablauf verursacht und den Reinigungseffekt sowie die Durchsatzleistung mindert. Negative Auswirkungen ergeben sich auch bezüglich der Anlagengröße, der technisch-ökonomischen Parameter, wie Durchsatzleistung pro umbaute Raumeinheit, Energieverbrauch usw.

In anderen bekannten Reinigungsanlagen wird in einem gemeinsamen Beckenraum nur die Flokkung bei langsamem Rühren mit folgender Absetzung der Flocken durch Sedimentation und mit einer Tieffiltration z. B. in einer schwebenden Filtratschicht durchgeführt. Die Verunreinigungen werden mittels eines Hebers in einem Sammelraum im Gegenstrom ausgewaschen. Das verunreinigte Waschwasser durch denselben Weg durch in eine Luftkammer gepumpte Druckluft zurückgeführt. Die Hauptnachteile bekannter Anlagen liegen in der Verbindung von nur einigen technologischen Operationen und in ihrem nicht ausgeglichenen Verlauf oder in der Überbelastung einzelner Funktionsstufen. Ferner haben bekannte Anlagen einen hohen Raum- oder Flächenbedarf und können nicht ohne weiteres an sich ändernde Bedingungen z. B. an Veränderungen der Qualität des Rohwassers angepaßt werden, was Überdimensionierungen erfordert. Im Betrieb entstehen weiter Schwierigkeiten bei der Bedienung der Anlage, besonders bei Manipulationen und bei der Einstellung der optimalen Leistungs- und Qualitätsparameter, was durch die unzureichende Eingriffsmöglichkeit in den Operationsablauf verursacht wird. Die Gesamtraumanordnung der Teilfunktionsräume und ihre Verbindung durch Rohrleitungen und Kanäle, welche von mehreren Seiten in ein gemeinsames Becken eintreten und aus diesem auf mehreren Seiten herausführen beschränken einen Anbau der Anlage an z. B. Gebäudewänden und ihre Einreihung in gemeinsame Blöcke, welche aus zwei und mehreren Einheiten zusammengesetzt sind.

Aufgabe der Erfindung ist es, eine Klär- und Aufbereitungsanlage zu schaffen, die auch bei besonders kritischen Abwässern und Suspensionen einen hohen Reinigungsgrad gewährleistet und bei vermindertem räumlichen und technischen Aufwand universell einsetzbar ist.

Bei der erfindungsgemäßen Anlage zur chemisch-physikalischen Aufbereitung oder Reinigung von Abwasser und Lösungen sind in höchstens zwei Becken alle technologischen Operationen für die Entstehung und Separation der Flocken sowie der Fällprodukte der verunreinigenden Stoffe integriert. Die optimalen hydraulischen Bedingungen ermöglichen die Flockung und die mehrstufige Separation der suspendierten und der gelösten Stoffe, durch Fluidseparation in einer schwebenden Flockenschicht mit folgender Absetzung der teilweise vorgereinigten Suspension vor dem Auslauf in das Filtrierbecken. Die räumliche Aufgliederung der technologischen Operationen in die zwei Becken, welche entweder übereinander oder nebeneinader untergebracht sind, verbessert Applikationsmöglichkeiten der Anlage, besonders bei der Modernisierung der bestehenden Betriebe der Wasseraufbereitungs- und Kläranlagen für Industrie-und Landwirtschaftsabwässer.

Schräge Scheidewände im Reaktorbecken begrenzen den Flockungsraum. Eine allmählich abnehmende Turbulenz der durchfließenden Suspension wird durch ein System von Einbauten erzielt, welche mindestens teilweise mit Öffnungen versehen sind. Der Fluidseparationsreaktor bildet einen zwischen der Eintauchwand des Flockungsbeckens und der Trennwand länglichen, nach oben sich verbreitenden Diffusor für eine schwebende Flockenschicht, deren Überschuß über eine Überlaufkante in den Schlammeindicker überfällt, welcher neben dem Diffusorraum des Reaktors angeordnet ist. Die vorgereinigte Flüssigkeitssuspension durchfließt aufsteigend einen Absetzraum, welcher mit Lamelleneinbauten versehen sein kann. Der Flokkungsraum mit den gelochten Einbauplatten zur vollkommenen Mischung der Flockensuspension verbreitet sich in absteigender Richtung, wodurch sowohl die Schnellmischphase als auch die Langsammischphase für die Mehrheit der aufbereiteten Wässer und der Abfallflüssigkeiten optimiert werden. Der Geschwindigkeitsgradient im Flockungsraum ändert sich von $G = 1000 - 300 \ s^{-1}$ bis auf $G = 10 \ s^{-1}$. Der Boden des Flockungsraumes ist schräg und verhindert dadurch Schlammablagerungen.

An den Flockungsraum ist der Diffusorraum des Fluidreaktors angeschlossen, dessen Einlaufquerschnitt 4 - 10 mal kleiner als die Fläche der Flockenwolke in der oberen Ebene der Überlaufkante ist, über welche der überschüssige Schlamm in den neben dem Fluidreaktor angeordneten Schlammeindicker eintritt. Für die Erhöhung des Wirkungsgrades des Schlammüberlaufes in den Eindicker ist die Scheidewand mit einer Orientierungszwischenwand versehen, die etwa in 1/5 bis 1/3 Tiefe des Eindickungsraumes eingreift. Aus dem Gipfel des Eindickungsraumes wird das Schlammwasser entweder durch ein waagerechts Lochrohr aus dem Reaktorbecken oder durch ein Rohrsystem abgezogen, das im ausfließenden Schlammwasser die Schlammflocken zurückhält. Die Intensität der Eindickung wird gesteigert durch einen pulsierenden Abzug des eingedickten Schlammes mittels einer gesteuerten Armatur im Abzugsrohr, dessen Einlaufsammler auf dem Boden des Eindickers verlegt ist.

Vorteilhaft sind im Diffusor des Fluidreaktors profilierte Einbauplatten vorgesehen, welche die Konzentration der suspendierten Teilchen in der schwebenden Schicht und gleichzeitig die Vergleichmäßigung der Teilchenverteilung begünstigen und damit das wirksame Einfangen der feineren Flockungsteilchen und ihrer Bruchstücke ermöglichen.

Das Reaktorbecken enthält somit außer dem Flockungsraum noch zwei Separationsstufen und den Raum der Eindickung des abgetrennten Schlammes, während das Filtrierbecken über oder neben dem Reaktorbecken angeordnet ist. Bei kleineren Leistungseinheiten können die Becken in ein gemeinsames Gefäß eingebaut sein, welches durch die Wand unterteilt ist, die einen Überlaufkanal für die Einleitung der vorgereinigten Flüssigkeit in das Filterbecken begrenzt. Die Verteilung auf zwei praktisch gleich große Becken der typisierten Größe von z. B. ISO Containern C10, erlaubt eine vertikale und horizontale Anordnung der ggf. verfahrbaren Becken und ermöglicht die Serienproduktion dieser Becken mit vorgefertigten Einzelteilen und eine besonders gute Anpassung an örtliche Gegebenheiten des Aufstellorts. Die horizontale Anordnung ist besonders günstig bei der Herstellung von Anlagen mit Durchsatzleistungen von 0,8 bis 4 l/s, wo die vorderen und hinteren Stirnwände und die Seitenwände und die Scheidewände nur die abgestuft verlängerte Länge aufweisen, beziehungsweise dieselben Teile der niedrigeren Größe wiederholt angewendet werden können.

Weitere Vorzüge und Besonderheiten sind bei den in der Zeichnung schematisch dargestellten Ausführungsbeispielen verwirklicht, die im folgenden ausführlicher beschrieben werden. Es zeigen:

Fig. 1 schematisch eine Aufbereitungsanlage mit übereinander angeordnetem Reaktor- und Filtrierteil im Vertikalschnitt,

Fig. 2 eine Aufbereitungsanlage mit nebeneinander angeordnetem Reaktor- und Filtrierbecken im Vertikalschnitt,

Fig. 3 eine Aufbereitungsanlage mit nebeneinander angeordneten integrierten Reaktor- und Filtrationsräumen im Vertikalschnitt,

Fig. 4 schematisch einen alternativen Klarwasserabzug über ein Sorptionsfilter,

Fig. 5 Endteile des Belüftungsrohrs mit einem Ausschnitt bzw. Löchern,

Fig. 6 eine Scheidewand des Flockungsbeckens.

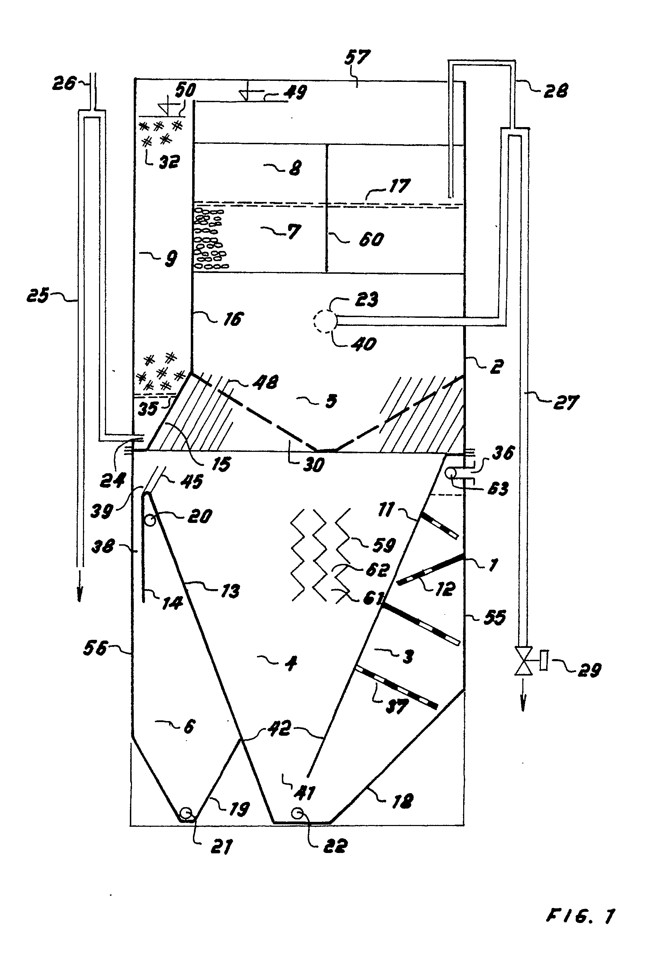

Bei den in den Fig. 1 bis 3 dargestellten Aufbereitungsanlagen ist das Reaktorbecken 1 in einen Flockungsraum 3 und einen Fluidreaktor 4 durch eine Trennwand 11 unterteilt, die vom oberen Ende des Reaktorbeckens 1 durchgehend oder teilweise schräg zur Reaktormitte hin verläuft und in einem vorbestimmten Abstand über dem Behälterboden endet. An der Trennwand 11 und an der Behälterwand 55 befestigte Lochbleche 12 und 37 ragen schräg nach unten in den Flockungsraum 3 hinein, in dessen oberen Endteil ein Schmutzwasserzulauf 36 mit einem gelochten Misch- und Verteilerrohr 63 einmündet. Eine schräge Bodenwand 18 verengt den Strömungsquerschnitt im unteren Teil des Flockungsraumes 3 und geht in den horizontalen Bodenteil des Fluidreaktors 4 über. Dieser sich nach oben erweiternde Fluidreaktor 4 wird von der schrägen Trennwand 11 und einer schrägen Seitenwand 13 begrenzt, deren oberes zurückgebogenes Ende 14 einen Überlauf 39 und einen in ein Sinkbecken 6 führenden Fallschacht 38 bildet. Im Inneren des Fluidreaktors 4 können die in Fig. 1 dargestellten Einbauten 59 bis 62 angeordnet sein.

Das nach unten breiter werdende Sinkbecken 6 hat die Funktion eines Eindickers und wird von der Behälterwand 56 der Seitenwand 13 sowie einer schrägen Bodenwand 19 begrenzt, wobei der vertikale Fallkanal 38 zwischen dem Wandabschnitt 14 und der Behälterwand 56 im oberen Teil des Sinkbeckens 6 endet. Je ein Schlammabzug 21 bzw. 22 sind im Bodenbereich des Sinkbeckens 6 bzw. des Fluidreaktors angeordnet.

Bei der Anlage nach Fig. 1 ist im unteren Teil des Filtrierbeckens 2 ein Absetzraum 5 vorgesehen, der durch einen durchbrochenen, beidseitig geneigten Boden 30 gegen den Fluidreaktor 4 abgetrennt ist. Seitlich neben diesem Absetzraum 5 befindet sich ein Adsorptionsfilter 9, der auf einer perforierten Bodenplatte bzw. einem Siebboden 35 ruht. In dem von diesem Siebboden 35 und einer schrägen Bodenwand 15 begrenzten Raum mündet ein Klarwasserabzug 24, der an eine Siphon-Leitung 25 mit oberem Entlüfter 26 angeschlossen ist. Über dem Absetzraum 5 ist ein Filter 7 vorgesehen, dessen Filtermaterial aus Schaumstoffkugeln (Polystyrol) oder anderen geeigneten z. B. mineralischen Stoffen bestehen kann, die eine um mindestens 10 % geringere spezifische Masse als die der aufzubereitenden Flüssigkeit haben. Zwischen dem Filter 7 und einem oberen Wasserspeicher 8 ist ein durchlässiger Zwischenboden 17 angeordnet, der die Filterstoffe am Aufschwimmen hindert. Der Filter 7 und auch der Wasserspeicher 8 werden seitlich von der vertikalen Wand 16 begrenzt und können durch vertikale Trennwände 60 in mehrere Sektionen unterteilt sein. Das obere Ende der vertikalen Wand 16 bestimmt den Wasserstand 49 und fungiert als Überlauf in den mit Adsorptionsmaterial 32 gefüllten Raum 9.

In den zentralen Bereich des Absetzraumes 5 mündet eine Rohrleitung 27 über einen mit Löchern 40 versehenen Verteiler 23. An eine oberhalb des Wasserspeichers 8 liegende Stelle der äußeren Rohrleitung 27 ist eine Zweigleitung 28 angeschlossen, die unmittelbar über dem Zwischenboden 17 endet. In dem vertikalen unteren Abschnitt der Rohrleitung ist eine Armatur 29 eingeschaltet.

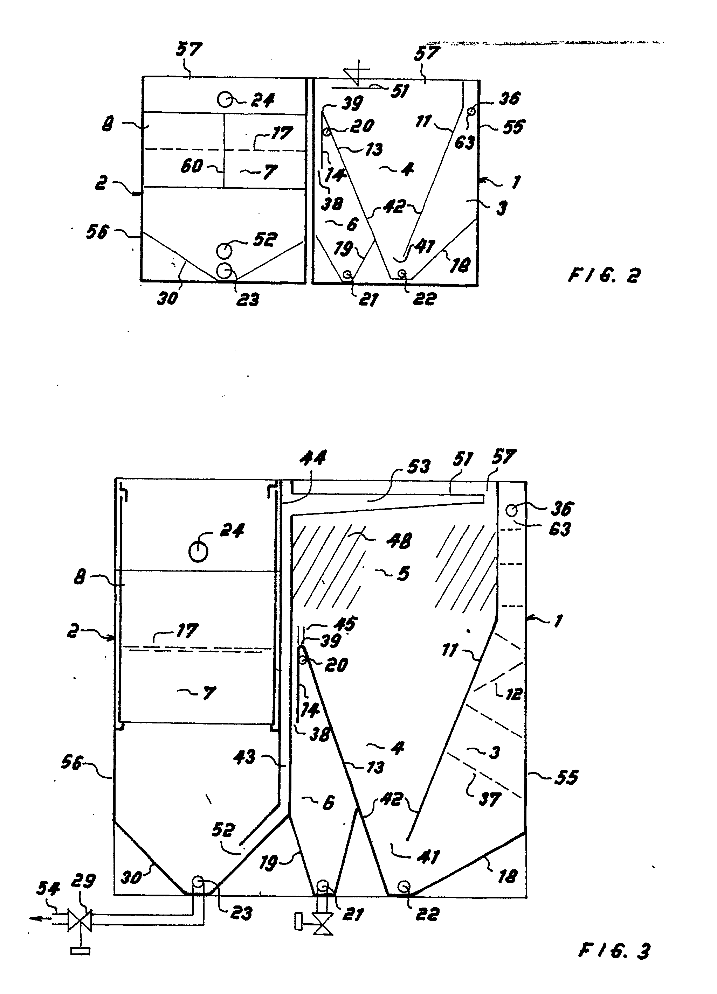

Die Anlage nach Fig. 2 entspricht weitgehend der vorstehend beschriebenen Aufbereitungsanlage nach Fig. 1. Jedoch sind das Reaktorbecken 1 und das Filtrierbecken 2 gesondert ausgebildet und nebeneinander angeordnet, was bei bestimmten Standortverhältnissen eine günstigere Raumnutzung und ggf. Wartung ermöglicht. Von einem Überlauf 51 im oberen Bereich des Reaktionsraumes 4 führt eine - nicht dargestellte - Leitung zu einem Einlaufstutzen 52 im Absetzraum des Filtrierbeckens 1.

Die Anlage nach Fig. 3 unterscheidet sich von der nach Fig. 2 im wesentlichen nur durch ihre integrierte Bauweise. Der Überlauf 51 führt über eine Rinne 53 in einen Fallkanal 43, der von der Seitenwand des Sinkbeckens 6 und der Seitenwand des Filtrierbeckens 2 begrenzt wird und bei 52 in den unteren Innenraum des Filtrierbeckens 2 ausmündet.

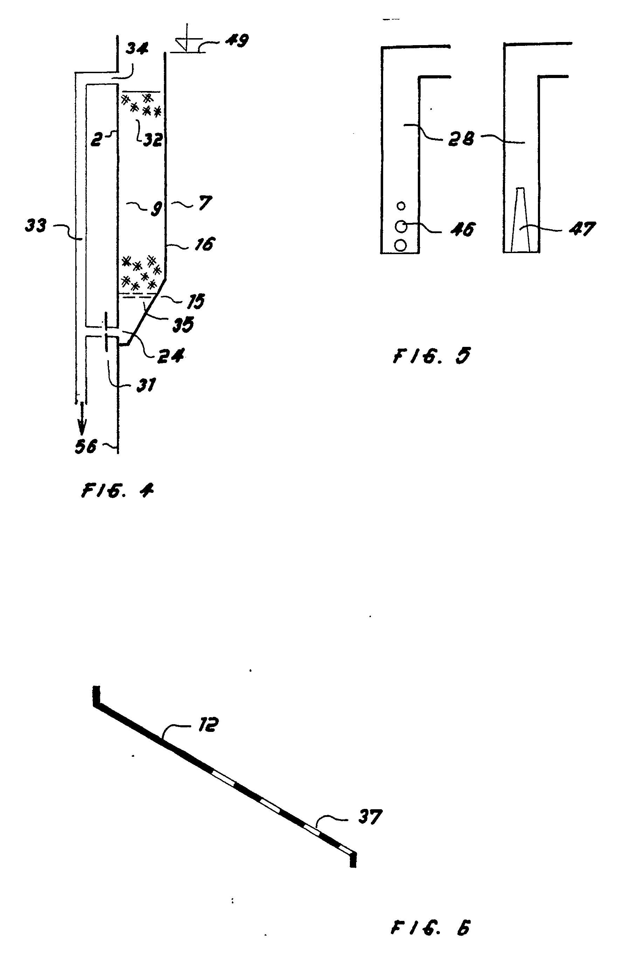

Bei den Anlagen nach Fig. 2 und 3 kann im Filtrierbecken 2 ebenfalls ein Adsorptionsfilter 9 vor den Klarwasserabzug 24 geschaltet werden, wie er z. B. in Fig. 4 dargestellt ist. In der zum Abzug 24 führenden Zweigleitung ist hier ein Sperr- und Dosierschieber 31 angeordnet. Oberhalb des Filters 9 befindet sich ein weiterer Abzug 34 der ebenso wie die Zweigleitung an die Klarwasserleitung 33 angeschlossen ist.

Die vorstehend beschriebenen Kläranlagen arbeiten wie folgt. Die Rohflüssigkeit mit den abzuscheidenden Schadstoffen fließt zusammen mit den dosierten Chemikalien durch den Eintrittsstutzen 36 in das Verteilerrohr 63, dessen Löcher nach unten gerichtet sind. die Abmessung und Anzahl der Löcher ermöglichen große Geschwindikeitsgradienten beim Ausfluß des Gemisches in das Flockungsbecken 3 und damit eine intensive Durchmischung. Im Flockungsbecken 3 sinkt das Gemisch unter Flockenbildung durch die Öffnungen 37 in den Platten 12 nach unten. Die Einbauten 12, 37 bewirken eine fortlaufende Homogenisierung der Flockensuspension und begünstigen die mechanische und physikalisch-chemische Agglomeration von Mikroflocken zu größeren Flockenagglomeraten bei sich fortlaufend bis auf $G = $ etwa $10 \text{ s}^{-1}$ vermindernden Geschwindigkeitsgradienten.

Die angestrebte Unterdrückung von Turbulenzen und das vergleichmäßigte Strömungsprofil im Flockungsraum 3 wird von der Anordnung der umströmten Platten 12 durch die Größe und Anzahl ihrer Öffnungen 37 und weiter durch die Querschnittsverbreitung des Flockungsbeckens 3 günstig beeinflußt. Wenn die Flocken praktisch vollständig agglomeriert sind, erfolgt beim Einströmen in die Einlauföffnung 41 eine mäßige Geschwindigkeitserhöhung, durch die eventuelle Ablagerungen von gröberen Flocken auf dem schrägen Boden 18 des Flockungsbeckens 3 zur Eintrittsöffnung 41 des Fluidreaktors 4 hin mitgenommen werden. In dem als Diffusor 42 wirkenden Fluidreaktor 4 steigen die Flocken langsam auf, wobei sich eine fluidisierte Flockenschicht bildet, in welcher sich die noch feineren Flocken an gröbere Flockenagglomerate anlagern. Die Berührungsaktivität wird durch eine Erhöhung der Flockenkonzentration gesteigert, die sich beim Durchströmen der Einbauten ergibt. Die Geschwindigkeitsänderungen der aufsteigenden Flockensuspension in den Kammern 61 und den Schlitzen 62 erhöht die Intensität der Zusammenballung der Flocken, mit der Folge einer höheren Ablagerungsgeschwindigkeit der Teilchen, einer höheren Oberflächenbelastung des Fluidreaktors 4 und eines höheren Separationswirkungsgrades.

Der aufsteigende überschüssige Schlamm fließt über die Überlaufkante 39 durch den Fallkanal 38 in den Eindicker 6, aus dem er in kurzen Inverallen über den Abzugsstutzen 21 mit Lochrohr abgezogen wird. Das Lochrohr ist auf dem Boden 19 des Eindickers 6 verlegt, was den gleichzeitigen Abzug des Schlammes aus dem ganzen Raum des Bodens 19 ermöglicht. Durch diesen pulsierenden Schlammabzug entstehen in der Schlammschicht Rückschläge, welche die Eindickung und die Abscheidung des Schlammwassers positiv beeinflußt.

Das Schlammwasser wird fortlaufend oder periodisch aus dem Reaktorbecken 1 durch das Ablauflochrohr 20 abgezogen oder durch die Überführungsleitung 45 in den Unterteil des Absetzbehälters 5 oberhalb der Flockenwolke überführt. Durch die in Fig. 1 gezeigte Anordnung des Ablaufrohrs 20 bzw. der Leitung 45 und des schlitzförmigen Fallkanals 38 wird die Mitnahme von einlaufenden Flocken durch das aufsteigende Schlammwasser verhindert. Durch das Austragen des überschüssigen Schlammes aus dem Fluidbecken 4 wird die Anfangskonzentration der in den Diffusor 42 eintretenden Flocken etwa um 50 bis 85 % erniedrigt.

Die Flüssigkeit mit dem verringerten Gehalt an suspendierten Stoffen steigt im Absetzbehälter 5 auf, in dem gegebenenfalls Lamelleneinbauten 48 angeordnet sind. Durch die verminderte Flockenkonzentration der im Absetzbehälter aufsteigenden Suspension wird eine höhere Absetzgeschwindigkeit gegenüber der Suspension mit der ursprünglichen Konzentration erzielt. Es erfolgt eine weitere Trennung der suspendierten Stoffe durch Sedimentation. Die schwereren Stoffe sinken zurück in die schwebende Flockenschicht und werden mit dem überschüssigen Schlamm in den Eindicker 6 ausgetragen. Der Separationswirkungsgrad des mit den Lamelleneinbauten 48 versehenen Absetzbehälters 5 beträgt 40 bis 70 % der Restkonzentration der in den Absetzbehälter 5 eintretenden Suspension.

Bei der vertikalen Anordnung des Reaktorbeckens 1 und des Filtrierbeckens 2 steigt die vorgereinigte Flüssigkeit aus dem Absetzbehälter 5 in das Filter 7. Die schwimmende Filtrationsschicht wird von dem Zwischenboden 17 unter dem Pegel 49 des aufbereiteten Wassers im Waschwasserspeicher 8 gehalten. Beim Durchfließen des Filters 7 werden die feinen Flockenteilchen mit einem Wirkungsgrad von 40 bis 95 % aufgefangen, so daß praktisch reines Wasser durch den ersten Zwischenboden 17 in den Waschwasserspeicher 8 fließt. Die Qualität des austretenden Klarwassers kann weiter durch den absteigenden Durchfluß durch das Sorptionsfilter 9 verbessert werden, auf dessen Sorptionsmaterial 32 die weiteren, überwiegend gelösten Stoffe, zum Beispiel die organischen geruchbildenden Stoffe, Schwermetallionen oder Salze u. ä. aufgefangen werden.

Das aufbereitete Wasser wird über den Austrittsstutzen 24 aus dem Raum unter dem Tragboden 35 des Sorptionsfilters 9 über das Siphonrohr 25 abgezogen. Durch die Entlüftung über das Rohr 26 wird der konstante Wasserspiegel 50 in dem Sorptionsfilter 9 eingestellt. Das Wasser kann auch mit dem in Fig. 4 dargestellten Austrittsstutzen 24 über die Blende 31 durchgeführt werden. Dabei fließen mindestens 70 % des Klarwassers durch die Blende 31 und der Rest über den Anschluß 34 in das Abzugsrohr 33.

Diese Anordnung ist vorteilhaft, wenn der Raum des Sorptionsfilters 9 nur als Zwischenspeicher zur Deckung der Wasserlieferung während der Regeneration der verunreinigten Filtrationsschicht des Filters 7 verwendet wird. Aus diesem Grund ist das Volumen des Sorptionsfilters 9 gleich oder höher als der des Waschwasserspeichers 8. Dadurch ergibt sich nur ein mäßiger Abfall der Menge vor dem Ende der Regenerationsperiode, weil der Wasserstand im Sorptionsfilter 9 abfällt.

Bei der horizontalen Anordnung des Reaktorbeckens 1 neben dem Filtrierbecken 2 nach Fig. 2 läuft das vorgereinigte Wasser vom Wasserstand 50 aus dem Reaktorbecken 1 oberhalb der nicht dargestellten Lamelleneinbauten 48 über den Überlaufstutzen 52 in das Filtrierbecken 2 über. Bei der anderen horizontalen Anordnung des Reaktorbeckens 1 und des Filtrierbeckens 2 nach Fig. 3 erfolgt der Wasserüberlauf durch den Kanal 43, welcher in der Scheidewand 44 zwischen dem Filtrierbecken 2 und dem Reaktorbecken 1 angeordnet ist. Im Reaktorbecken 2 fließt das Wasser im Pegelstand 51 in den Überfallabzug 53, welcher entweder als eine offene Rinne mit zahnartiger Kante oder als ein Lochrohr ausgebildet ist.

Das verunreinigte Filtriermaterial des Filters 7 wird mit Waschwasser durch den Waschheber 27 durchgeführt, welcher an das mit nach unten oder schräg seitwärts gerichteten Öffnungen 40 versehene Lochabzugsrohr 23 angeschlossen ist. Der Waschheber 27 überragt mit seinem oberen Ende die Ebene des Zwischenbodens 17 und ist im unteren Teil an den Abflußstrang über die Armatur 29 angeschlossen. Bei einem Druckabfall im Filter 7 öffnet die Armatur 29 automatisch um einen Wert, der dem eingestellten optimalen Verlauf des Filtrationszyklus entspricht. Durch Öffnen der Armatur 29 erfolgt ein schneller Wasserabfluß aus dem Raum unter dem Filter 7, wobei das Wasser aus dem Waschwasserspeicher 8 die Filtratschicht des Filters 7 durchdringt, welche sich beim Durchfluß des Waschwassers um 5 bis 50 % ihrer Dicke ausdehnt. Sobald das Wasser im Waschwasserspeicher 8 bis über den Zwischenboden 17 abgesunken ist, kommt es zur Belüftung des Waschhebers 27 über das Belüftungsrohr 28, wodurch der Wasserabzug über das Abzugsrohr 23 unterbrochen wird. Praktisch gleichzeitig steigt das Filtermaterial in ihre ursprüngliche Lage im Filter 7 durch die Differenz der spezifischen Massen der Flüssigkeit und der Körner des Filtrationsmaterials, während die abgelösten Flockenteilchen zum Boden 30 des Filtrierbeckens 2 absinken. Bei der vertikalen Anordnung gemäß Fig. 1 gelangen sie im Absetzbehälter 5 in die Schicht des Flockenschlammes und werden hier ebenso wie die aufsteigenden Flocken an den Lamelleneinbauten 48 abgetrennt. Die in dem Filtrierbecken 2 abgesetzten Flocken werden bei dem folgenden Waschen des Filtermaterials des Filters 7 abgeschlämmt.

Das Ende des Belüftungsrohres 28 kann vorteilhaft mit einem in Fig. 5 dargestellten Ausschnitt 47 versehen werden, welcher sich in Richtung zum Ende des Belüftungsrohres 28 verbreitert. Das Ende des Belüftungsrohres 28 kann auch eine Reihe von Öffnungen 46 aufweisen, deren Durchmesser ebenfalls abgestuft sein kann. Die Länge des Ausschnittes 47 oder der Reihe der Öffnungen 46 des Belüftungsrohres 28 sollte etwa 30 bis 150 mm betragen. Sobald der Wasserspiegel im Waschwasserspeicher 8 bis zum Ausschnitt 47 oder zu der oberen Öffnung 46 des Belüftungsrohres 28 gefallen ist, kommt es zum Lufteintritt in das Belüftungsrohr 28 und in den Kopf des Waschhebers 27, was den Wasserabzug durch den Waschheber 27 vermindert und die fraktionsweise Anlagerung der Filtratteilchen an der Unterseite des Zwischenbodens 17 ermöglicht, wobei zuerst die größeren Teilchen aufsteigen. Nach der Beendigung des Abzuges des Waschwassers durch den Waschheber 27 beginnt sogleich der folgende Filtrationszyklus, weil der Rohwasserzulauf durch den Einlaßstutzen 36 in das Reaktorbecken 1 nicht unterbrochen wurde und dadurch die normalen Betriebsbedingungen der Flockung, des Fluidreaktors 4 und der Absetzung erhalten blieben. Bei einer Stillsetzung des Betriebes im Reaktorbecken 1 würde sich der Flockenschlamm auf dem Boden des Fluidreaktors 4 auf den Platten 12 und dem schrägen Boden 18 des Flockungsbeckens 3 absetzen. Beim Wiederanfahren müßten diese abgelagerten Flockenschlämme wieder in ihre Betriebslage angehoben werden, was einen Zeitverlust bedeutet und zu weiteren Betriebsschwierigkeiten führen kann. Der Abzug des Klarwassers kann auch nur durch das Fallrohr 54 durchgeführt werden, das an das Abzugsrohr 23 bzw. die Armatur 29 angeschlossen ist. Die Armatur 29 kann mit Hilfe des Zeitrelais oder mit Hilfe des Wasserstandsfühlers betätigt werden.

Das Waschen der verunreinigten Filterschicht des Filters 7 mit der schwimmenden Filtrationsschicht vollzieht sich sehr schnell und dauert praktisch nur 20 bis 60 Sekunden, weil das abgezogene Waschwasser den Filter mit einer Geschwindigkeit von 3 bis 30 mm/s durchströmt. Bis zur erneuten Betriebsbereitschaft des Filters 7 mit der schwebenden bzw. schwimmenden Filtrationsschicht, bis zur Füllung des Waschwasserspeichers 8 wird eine Zeitspanne von ungefähr 300 bis 900 s benötigt.

Zur Verbesserung der Wäsche der verunreinigten Filtrationsschicht kann das Filter 7 mit der schwimmenden Filtrationsschicht und der untere Teil des Waschwasserspeichers 8 in kleinere parallele Teilräume durch eingelegte Zwischenwände 60 unterteilt werden, wobei an der oder den Zwischenwänden das Sieb des ersten Zwischenbodens 17 befestigt sein kann. Durch diese Maßnahme wird auch der Zwischenboden 17 unterteilt, wodurch übermäßige Durchbiegungen des Zwischenbodens 17 vermieden werden. Durch die Unterteilung des Filters 7 und des Waschwasserspeichers 8 in mehrere parallele Räume wird das Waschwasser gleichmäßiger verteilt und die Filtration sowie das Durchwaschen der Filtrationsschicht werden insgesamt verbessert, weil die gegebenenfalls gebildeten Schlammklumpen durch das Waschwasser des zugehörigen Sektors zerkleinert werden, das nur durch den von den Zwischenwänden 60 begrenzten Teilraum durchfließen kann.

Das Reaktorbecken 1 und das Filtrierbecken 2 können als ein zylinderförmiger stehender geschweißter Behälter oder vorteilhaft als rechtwinkliger Behälter ausgeführt werden, mit Seitenwänden 55, 56, Stirnwänden 57 und einem Boden. Bei der vertikalen Anlage nach Fig. 1 enthält der Behälterboden die Bodenwände des Flockungsbeckens 3 und des Eindickers 6. Bei horizontaler Anordnung der Funktionsräume nach Fig. 2 und 3 wird der Behälterboden zusätzlich noch von den Bodenwänden 30 des Filtrierbeckens 2 gebildet.

Der Einzugsstutzen 36, der Überströmstutzen 52 des Überlaufkanals 43, und die Auslaßstutzen 21, 22, 24 bzw. auch der Überlaufstutzen 34 können in der vorderen Stirnwand 57 des Reaktorbeckens 1 und des Filtrationsbeckens 2 angeordnet sein. Bei rechtwinkliger Konstruktion des Reaktorbeckens 1 und des Filtrationsbeckens 2 sind die Seiten-und Stirnwände 55, 56, 57 mit Rippen gegen Deformationen versteift, welche durch den Innendruck des Wassers verursacht werden. Die Böden 18, 19 des Reaktorbeckens 1 und der Boden 30 des Filtrierbeckens 2 sind ebenso wie die Zwischenwände 13, 15, 16 und die Trennwand 11, sowie die Platten 12 des Flockungsbeckens 3 sind als dicht an die Stirnwände 57 der Becken angeschlossene Platten ausgebildet, wodurch ein System von selbständigen Funktionsräumen entsteht, nämlich das Flockungsbecken 3, der Fluidreaktor 4, der Absetzraum 5, der Eindicker 6, der Filter 7 mit der schwimmenden Filterschicht und der Wasserspeicher 8 mit dem gemeinsamen Wasserspiegel 49 und der Sorptionsfilter 9 mit dem niedrigeren Wasserspiegel 50.

Alle Wände und Böden sind von außen und von innen mit den wasserbeständigen Anstrichen versehen oder bestehen aus korrosionsbeständigen Materialien.

Bei der Installation der Anlage im Freien werden die Behälterwände mit einer Isolationsschicht versehen und gegebenenfalls das bzw. die Becken durch eine abnehmbare Decke abgedeckt, welche das gereinigte Wasser gegen Verunreinigungen aus der Atmosphäre schützt.

Die Hauptvorteile der beschriebenen Ausführungsbeispiele der Anlage zur Aufbereitung und Reinigung der Abfallwässer liegen vor allem in der einfachen, leichten Konstruktion, welche eine industrielle Serienfertigung mit Vorfertigung von Einzelteilen ermöglicht. Bei nur minimaler Ausstattung mit den Regelungsmitteln arbeitet die Anlage vollautomatisch.

**Ansprüche**

1. Verfahren zur Aufbereitung und Reinigung von Flüssigkeitssuspenisonen, Abwasser und Lösungen mit den folgenden kontinuierlich ablaufenden Verfahrensschritten:

   a) die zu reinigende Suspension wird mit dosierten Mengen geeigneter Reagenzien durchmischt,

   b) in einem abfallenden Strom der Suspension mit abnehmender Strömungsgeschwindigkeit werden die Schmutzstoffe ausgeflockt,

   c) in einem aufsteigenden Strom der die Flokken enthaltenden Suspension werden durch Fluidfiltration die Flocken agglomeriert,

   d) aufschwimmender Schlamm wird eingedickt und pulsierend ausgetragen,

   e) die vorgereinigte Suspension wird in einem Filter von restlichen Flocken gereinigt und durch Überlauf als Klarwasser abgeführt,

   f) wobei der Filter periodisch durch Gegenstromspülung mit Klarwasser ausgewaschen wird.

2. Verfahren nach Anspruch 1,
**dadurch gekennzeichnet,**
daß die gelösten Substanzen aus dem Klarwasser in einem Adsorptionsfilter und/oder einem Ionenaustauscher entfernt werden.

3. Anlage zur Aufbereitung von Flüssigkeitssuspensionen und/oder Lösungen in hydraulisch durchgeschalteten Teilfunktionsräumen für die Fällungs-, Reduktionsoxydations-, Neutralisations-, Koagulations- und Flockungsprozesse, sowie in Räumen zur mehrstufigen Separation der suspendierten Stoffe,
**dadurch gekennzeichnet,**
daß in einem Reaktorbecken (1) ein Fluidreaktor (4), ein durch eine Trennwand (11) abgetrenntes seitliches Flockungsbecken (3) und ein durch eine Zwischenwand (13) abgetrennter Eindicker (6) angeordnet sind und daß in einem Filtrationsbecken (2) ein Filter (7) mit einer schwimmenden Filtrierschicht und darüber ein Waschwasserspeicher (8) angeordnet sind, wobei hydraulische Mittel (23, 27 - 29) zur periodischen Strömungsumkehr im Filter (7) vorgesehen sind.

4. Anlage nach Anspruch 3,
**dadurch gekennzeichnet,**

daß das Filtrierbecken (2) und das Reaktorbecken nebeneinander zu einer Einheit verbunden und durch eine Scheidewand (44) mit einem Überlaufkanal (43) getrennt sind.

5. Anlage nach Anspruch 3 oder 4,
**dadurch gekennzeichnet,**
daß das Flockungsbecken (3) sich in absteigender Fließrichtung mindestens in der oberen Hälfte seiner Länge verbreitert und plattenförmige Einbauten (12) ggf. mit Öffnungen (37) enthält, deren Gesamtfläche sich in Richtung nach unten vergrößert.

6. Anlage nach Anspruch 5,
**dadurch gekennzeichnet,**
daß im obersten Teil des Flockungsbeckens (3) ein Einlauf-Verteiler (63) angeordnet ist, dessen Öffnungen 60 bis 200 % der Fläche seines Strömungsquerschnittes haben und der an einen Rohwassereinlaufstutzen (36) angeschlossen ist.

7. Anlage nach Anspruch 5 oder 6,
**dadurch gekennzeichnet,**
daß die Platten (12) im Flockungsbecken (3) zumindest an ihrem freien Ende mit Öffnungen (37) versehen sind, welche mindestens auf einem Viertel der Plattenfläche ausgebildet sind, wobei die Gesamtfläche der Plattenöffnungen (37) jeder unteren Platte (12) gleich oder größer als die der oberen Platte (12) ist.

8. Anlage nach einem der Ansprüche 3 bis 7,
**dadurch gekennzeichnet,**
daß die Trenn- bzw. Eintauchwand (11) und die Zwischenwand (13) schräg sind und miteinander einen nach oben sich verbreitenden Diffusor (42) im Fluidreaktor (4) bilden, dessen Eintrittsöffnung (41) 4 bis 10 mal kleiner als die Querfläche des Diffusors (42) in der Ebene der Überlaufkante (39) des Fluidreaktors (4) ist.

9. Anlage nach einem der Ansprüche 3 bis 8,
**dadurch gekennzeichnet,**
daß die Zwischenwand (13) oben in einer Überlaufkante (39) endet, an die ein schlitzförmiger Fallkanal (38) für den Schlammeintritt in den Eindicker (6) anschließt.

10. Anlage nach einem der Ansprüche 3 bis 9,
**dadurch gekennzeichnet,**
daß im Gipfel des Eindickers (6), der durch die Zwischenwand (13) und eine vertikale Scheidewand (14) begrenzt ist, ein Ablauflochrohr (20) für den Abzug des Schlammwassers aus dem Eindicker (6) angeordnet ist.

11. Anlage nach einem der Ansprüche 8 bis 10,
**dadurch gekennzeichnet,**
daß in der Überlaufkante (39) ein Überführungsrohr (45) für die Abführung des Schlammwassers aus dem Eindicker (6) untergebracht sind, das in den Unterteil eines Absetzbehälters (5) führt.

12. Anlage nach einem der Ansprüche 3 bis 11,
**dadurch gekennzeichnet,**
daß an ein Abzugsrohr (23) ein Waschheber (27) mit einem Belüftungsrohr (28) anknüpft, welches oberhalb eines Zwischenbodens (17) des Filtes (7) endet, wobei der untere Endteil dieses Belüftungsrohrs (28) einen Ausschnitt (47) oder Öffnungen (46) aufweisen kann, deren Breite sich nach oben verringert.

13. Anlage nach einem der Ansprüche 3 bis 12,
**dadurch gekennzeichnet,**
daß ein Sorptionsfilter (9) mit einem Sorptionsmaterial (32) seitlich im Filtrierbecken (2) angeordnet und auf einem perforierten Zwischenboden (35) gelagert ist, daß ein Siphonrohr (25) mit einem Klarwasserstutzen (24) verbunden ist, aus dessen Gipfel ein Entlüftungsrohr (26) austritt, wobei der Scheitel des Siphonrohres (25) höher als das Niveau des Sorptionsmaterials (32) und unter der Kante der den Sorptionsfilter (9) abtrennenden Zwischenwand (16) liegt.

14. Anlage nach einem der Ansprüche 3 bis 13,
**dadurch gekennzeichnet,**
daß an den Sorptionsfilter (9) ein Überlaufstutzen (34) mit einem Klarwasser-Abzugsrohr (33) angeschlossen ist und daß in einem mit dem unteren Ablaufstutzen (24) verbundenen Zweigrohr eine Blende (31) eingeschaltet ist.

15. Anlage nach Anspruch 13 oder 14,
**dadurch gekennzeichnet,**
daß der Gipfelteil des Siphonrohres (25) höheneinstellbar ist.

16. Anlage nach einem der Ansprüche 3 bis 15,
**dadurch gekennzeichnet,**
daß der Rauminhalt des Sorptionsfilters (9) 50 bis 150 % des Rauminhaltes des Waschwasserspeichers (8) beträgt.

17. Anlage nach einem der Ansprüche 3 bis 16,
**dadurch gekennzeichnet,**
daß alle Zuführungs- und Abzugsstutzen in dem Reaktorbecken (1) und dem Filtrationsbecken (2) in der vorderen Stirnwand (57) angeordnet sind.

18. Anlage nach einem der Ansprüche 3 bis 18,
**dadurch gekennzeichnet,**
daß der Raum des Filters (7) mit der schwimmenden Filtrationsschicht und ein Teil des Raumes des Waschwasserspeichers (8) durch Zwischenwände (60) in parallelen Teilkammern abgeschottet sind.

FIG. 1

FIG. 2

FIG. 3

FIG. 4

FIG. 5

FIG. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | PRODUKTENÜBERBLICK DER FIRMA ROZKA TRADING & SERVICE B.V., Schiedam, NL, Januar 1986 und September 1986 * Seite 2, Mittelspalte; Seite 3, Mittelspalte; Seiten 5,7,11 * --- | 1-4,8-10,17 | C 02 F 1/52 B 01 D 21/08 B 01 D 21/24 |
| A | DE-A-2 740 308 (SIGMA) * Ansprüche * --- | 1,3 | |
| A | GB-A-1 535 591 (SOCIETE D'EPURATION ET D'ENTREPRISES) * Seite 2, Zeilen 75-80 * ----- | 1,3 | |

**RECHERCHIERTE SACHGEBIETE (Int. Cl.5)**

C 02 F
B 01 D

Der vorliegende Recherchenbericht wurde für alle Patentansprüche erstellt

| Recherchenort | Abschlußdatum der Recherche | Prüfer |
|---|---|---|
| DEN HAAG | 03-03-1990 | KASPERS H.M.C. |